# FASCICULE DE BREVET EUROPEEN

(11) **EP 1 876 992 B1**
(45) Date de publication et mention de la délivrance du brevet: **02.10.2013**
(21) Numéro de dépôt: 06743377.1
(22) Date de dépôt: 21.04.2006
(51) Int. Cl.: A61C 8/00

(54) **DISPOSITIF POUR L'IMPLANTOLOGIE DENTAIRE**
DENTALIMPLANTATVORRICHTUNG
DENTAL IMPLANTOLOGY DEVICE

(30) Priorité: 29.04.2005 FR 0551123
(43) Date de publication de la demande: 16.01.2008
(73) Titulaire: Scortecci, Gérard, 06000 Nice (FR)
(72) Inventeur: Scortecci, Gérard, 06000 Nice (FR)
(74) Mandataire: Decobert, Jean-Pascal
(86) Numéro de dépôt international: PCT/EP2006/061761
(87) Numéro de publication internationale: WO 2006/117298

(56) Documents cités:
- EP-A- 0 903 116
- WO-A-2004/084755
- DE-A1- 2 628 443
- FR-A- 2 571 607

## Description

La présente invention concerne un dispositif pour l'implantologie dentaire. Plus précisément, ce dispositif comporte à la fois un outil de forage et un implant homologue de l'outil permettant l'ancrage d'un dispositif prothétique.

L'invention propose plus particulièrement un implant, avantageusement en titane pur et profilé pour s'adapter aux particularités anatomiques des structures osseuses maxillaires et mandibulaires.

On entend par dispositif prothétique tout ensemble apte à être rapporté sur l'implant de sorte à former une prothèse dentaire pour une ou plusieurs dents.

On entend par implant homologue de l'outil de forage toute structure capable d'être insérée dans l'os, avantageusement immédiatement après le passage dudit outil sans qu'il soit besoin d'élargir ou de modifier par taraudage le forage.

L'implantologie dentaire est un domaine qui connaît une forte croissance et de nombreux implants et outils d'implantation ont déjà été présentés.

D'une façon classique, le praticien, pour la pose d'implants suivant une direction axiale verticale, réalise un trou servant de siège à l'implant. Ce trou est réalisé par forages successifs avec des outils de forage de diamètres différents et croissants. Généralement, au moins deux ou trois outils de forage sont utilisés. La finition du trou est opérée par un taraud. Il n'est pas rare de voir se succéder jusqu'à 6 outils jusqu'à la pose de l'implant.

L'emploi de ces multiples outils présente l'inconvénient d'allonger la durée de la procédure implantaire. En outre, des problèmes d'alignement des axes des outils successifs sont posés. De même, des risques d'ovalisation, d'échauffement ou de bourrage existent.

Par ailleurs, les outils standards ne sont pas particulièrement adaptés à l'implant à ancrer et ne comportent aucune butée de sécurité permettant d'arrêter le foret dans sa progression de sorte à éviter sa pénétration intempestive sur un nerf, dans les sinus ou fosses nasales..

En outre, les forets et implants actuellement utilisés ne tiennent pas suffisamment compte des spécificités de la structure osseuse notamment en ce qui concerne les variations de densité.

Le document EP 0 903 116 décrit un outil de forage et un implant homologues. Le zone centrale de l'implant est conique.

Le document FR 2 571 607 divulgue un implant avec une zone centrale cylindrique. De multiples outils de forage sont utilisés. Le fût de l'implant n'a pas un filetage de vis, mais une série d'anneaux séparés "non vissables"; visser est décrit comme nocif.

Le document WO 2004/084755 divulgue un implant ayant un filetage avec une microstructure. L'implant est hélicoïdal; aucun outil de forage n'est mentionné.

Il existe donc un besoin d'améliorer l'ancrage des implants dentaires par une combinaison optimale d'un outil et d'un implant. L'implant est ainsi parfaitement calibré en fonction de l'outil de forage et ces deux éléments évoluent en adéquation parfaite.

Un avantage de l'invention est que l'outil de forage est parfaitement dessiné en fonction des variations de la densité osseuse classiquement rencontrée lors du passage dans l'os des mâchoires mais également des risques anatomiques (nerfs, sinus, fosses nasales). A cet effet, l'outil de forage est muni d'une butée de sécurité active. En effet, l'os mandibulaire ou maxillaire présente une zone de transition de densité délimitant une zone supérieure plus dense et une zone inférieure plus aérée. La configuration étagée de l'outil de forage ici proposé ainsi que les différentes zones suivant la hauteur de l'implant de l'invention permettent de s'adapter à ces variations de densité. L'outil ici proposé assure par ailleurs avantageusement en une seule passe et sans autre matériel la formation du trou, permettant le blocage primaire de l'implant qui est absolument nécessaire pour sa future ostéo intégration.

On notera par ailleurs que l'implant selon l'invention présente, suivant son mode de réalisation préféré, une partie cylindrique entourée de deux portions tronconiques lesquelles, en combinaison avec le forage cylindrique opéré par les étages de l'outil de forage, permettent une mise en compression de la paroi du trou endo-osseux de sorte que l'implant compacte la zone osseuse périphérique. On obtient un effet de calage de l'implant lors du passage en douceur de chaque strate formée par l'outil. En cas de nécessité de retrait, il suffit d'activer en reverse le système d'entraînement de l'implant pour le dégager du lit receveur.

Suivant une possibilité avantageuse de l'invention, l'implant est auto taraudant depuis sa base jusqu'à sa crête pour permettre l'évacuation de la pression hydraulique et opérer un taraudage lors de sa mise en place. Le détalonnage des parties coupantes du taraud ont une orientation verticale suivant l'axe de l'implant et non hélicoïdale. Les demandeurs ont constaté que cette disposition permettait une évacuation optimale de la pression hydraulique et des débris osseux lors de l'auto taraudage.

Suivant d'autres possibilités préférées de l'invention, l'implant comporte sur au moins une partie de sa périphérie, mais avantageusement son intégralité, un macro filetage sur lequel un micro filetage est lui-même réalisé puis une nano texture. Cet ensemble permet d'accroître considérablement la surface de contact entre l'implant et la paroi osseuse. Le macro filetage et le micro filetage évoluent simultanément dans le trou de forage au fur et à mesure de l'implantation au contraire d'autres motifs actuellement rencontrés sur le marché.

Suivant une autre possibilité, l'implant comporte des cuvettes de rétention au niveau des flancs de filet de sorte à assurer le maintien de cellules souches pour la reconstruction osseuse. Plus particulièrement, ces cuvettes sont une zone de réserve de quantité importante de cellules souches et évitent leur échappement lors de la mise en place de l'implant.

D'autres buts et avantages apparaîtront au cours de la description qui suit d'un mode préféré de réalisation de l'invention qui n'est cependant pas limitatif.

La présente invention concerne un dispositif pour l'implantologie dentaire comportant un outil de forage de l'os d'une mâchoire et un implant apte à l'ancrage d'un dispositif prothétique. Selon l'invention, ce dispositif est tel que :

a- l'outil de forage présente cinq étages avec, successivement,

- un étage de pointage au niveau de l'extrémité distale,

- un étage de forage apical pilote

- un étage d'élargissement central de diamètre supérieur à celui de l'étage de forage pilote,

- un étage de forage terminal de diamètre supérieur à celui des étages précédents,

- un étage de butée crestale au niveau de l'extrémité proximale de l'outil de forage ;

b- l'implant est formé de façon homologue à l'outil de forage et comporte cinq zones sur sa hauteur avec, successivement :

- une zone apicale arrondie d'une hauteur sensiblement inférieure ou égale à celle de l'étage de pointage,

- une zone de base tronconique d'une hauteur sensiblement équivalente à celle de l'étage de forage pilote de l'outil de forage,

- une zone d'ancrage central cylindrique de hauteur sensiblement équivalente à celle de l'étage d'élargissement central de l'outil de forage,

- une zone d'ancrage terminale tronconique de hauteur sensiblement équivalente à celle de l'étage de forage terminal de l'outil de forage,

- une zone de butée d'une hauteur sensiblement équivalente à celle de l'étage de butée crestale de l'outil de forage.

Suivant des variantes préférées, ce dispositif est tel que :

- la zone d'ancrage terminale de l'implant a une hauteur comprise entre 20% et 35% de la hauteur totale de l'implant,

- la zone d'ancrage terminale de l'implant a une hauteur comprise entre 1,7 et 3,5 mm,

- l'étage de butée de l'outil de forage est un lamage dont la surface latérale a un profil de coupe,

- l'implant comporte quatre rainures longitudinales de taraudage depuis la zone apicale jusqu'à la zone d'ancrage terminale,

- la zone d'ancrage centrale et la zone de base de l'implant comportent un filetage primaire sur la surface duquel est formé un filetage secondaire de plus petite dimension,

- le filetage primaire a un pas de 0,9 mm et le filetage secondaire a un pas compris entre 0,25 mm et 0,4 mm,

- la zone d'ancrage terminale de l'implant comporte un filetage dont le pas est compris entre 0,25 mm et 0,4 mm,

- la surface périphérique filetée de l'implant présente un motif nanométrique additionnel,

- les flancs du filetage primaire comportent des cuvettes de réception de cellules souches,

- le filetage primaire est trapézoïdal symétrique,

- le filetage primaire est trapézoïdal asymétrique,

- le filetage primaire a un profil rectangulaire.

Les dessins ci-joints sont donnés à titre d'exemples et ne sont pas limitatifs de l'invention. Ils représentent seulement un mode de réalisation de l'invention et permettront de la comprendre aisément. L'invention est définie dans les revendications.

La figure 1 montre une vue générale de l'implant suivant l'invention dans un exemple de réalisation et la figure 2 illustre en parallèle une conformation de l'outil de forage en adéquation avec la structure de l'implant.

Les figures 3 et 4 montrent des variantes de réalisation de filetages réalisés sur la surface extérieure de l'implant.

La figure 5 montre un exemple de trou réalisé dans l'os de la mâchoire pour recevoir un implant dont la mise en place est présentée en figure 6.

La figure 7 est une vue partielle suivant la ligne F de la figure 5.

La figure 8 illustre une possibilité de réalisation de rainures de formation d'un taraud pour la fonction auto taraudante de l'implant avec 4 rainues.

La figure 9 montre une vue générale de l'outil de forage dans un mode de réalisation et la figure 10 montre une variante de l'invention dans laquelle l'implant présente, au niveau du filetage périphérique, un système de cuvettes.

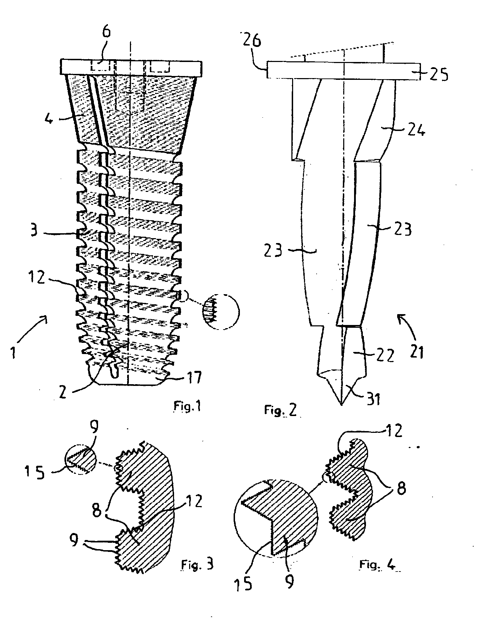

Tel qu'indiqué précédemment, l'invention se rapporte à une association spécifique d'un implant et d'un outil de forage. Un exemple d'association est présenté aux figures 1 et 2.

A ces figures, on constate la nature stratifiée tant de l'implant 1 que de l'outil de forage 21.

En ce qui concerne l'implant 1, plus précisément, il comporte depuis son extrémité inférieure jusqu'à son extrémité supérieure, successivement, une face inférieure 7 jouxtant une zone apicale 17 légèrement arrondie de sorte à adoucir l'extrémité distale de l'implant 1 et une zone de base 2 ayant un profil tronconique se rétrécissant vers la face inférieure 7.

Au dessus de la zone de base 2, une zone d'ancrage centrale représentée sous forme cylindrique est réalisée dans la continuité du plus grand diamètre de la portion tronconique de la zone de base 2.

Au-delà de la zone d'ancrage centrale 3, une zone d'ancrage terminale 4 est formée et illustrée sous forme tronconique allant en s'évasant vers l'extrémité proximale de l'implant 1, c'est-à-dire sa crête.

Coiffant la zone d'ancrage terminale 4, une zone de butée 5 crestale est formée. Le diamètre de la zone de butée 5 est légèrement supérieur à celui du plus grand diamètre de la zone d'ancrage terminale 4 de sorte à préserver une surface d'arrêt 11 périphérique.

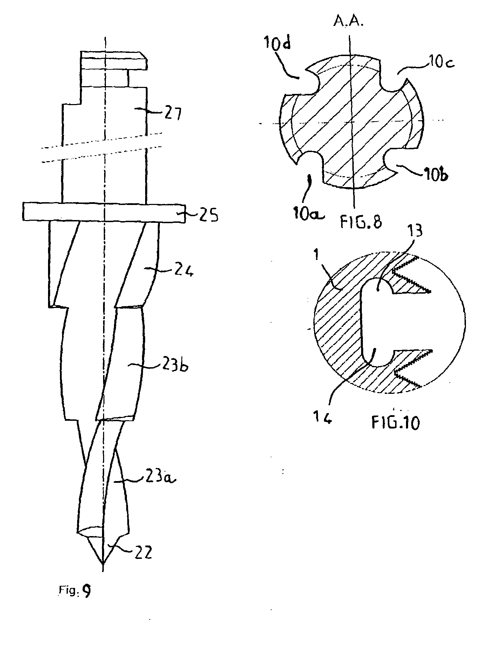

De façon correspondante, l'outil de forage 21 de l'invention comporte depuis sa partie inférieure jusqu'à son extrémité supérieure, en référence aux figures 2 et 9, un étage de pointage apte à fixer en position l'outil de forage dans l'os de la mâchoire lors du processus d'attaque du forage, un étage de forage pilote apical 22 réalisant une première étape de forage avec une petite section, un étage d'élargissement central 23 réalisant un forage successif de diamètre plus élevé, un étage de forage terminal 24 assurant un usinage terminal de plus grand diamètre et un étage de butée 25 offrant une caractéristique de sécurité active pour l'outil de forage 21 en ce qu'il arrête automatiquement la descente de l'outil dans le trou 16 en formation.

Les dimensions des différentes parties constitutives de l'implant 1 et de l'outil de forage 21 sont réalisées en correspondance. Particulièrement, l'étage de forage pilote 22 de l'outil de forage 21 a une hauteur sensiblement équivalente à la zone de base 2 de l'implant 1 et un diamètre légèrement inférieur de sorte à faire une mise en place par encastrement de la zone de base 2.

De même, la zone d'ancrage centrale 3 de l'implant 1 a une hauteur sensiblement équivalente à celle de l'étage d'élargissement central 23 de l'outil de forage 21. De même, le diamètre de l'implant 1 à ce niveau est légèrement supérieur à celui de la zone d'élargissement central 23.

Toujours en adéquation, l'étage de forage terminal 24 a une hauteur sensiblement équivalente à la zone d'ancrage terminale 4 de l'implant 1. Par ailleurs, le diamètre de l'outil de forage 21 à ce niveau est sensiblement équivalent au plus petit diamètre de la portion tronconique constitutive de la zone d'ancrage terminale 4.

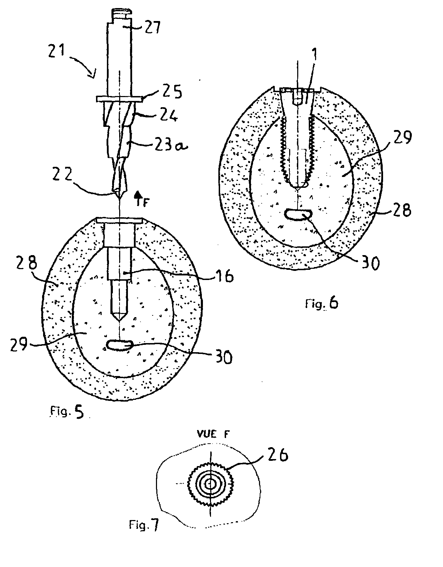

Plus précisément, il est avantageux que la zone d'ancrage 4 et l'étage 24 de l'outil de forage 21 aient une hauteur sensiblement équivalente à la hauteur de la partie d'os dense 28 de l'os de la mâchoire. Ce cas est présenté notamment aux figures 5 et 6. Ainsi, l'outil de forage 21 et l'implant 1 selon l'invention profitent d'une possibilité d'ancrage maximale à ce niveau avec une section élargie et ce sans atteindre la zone plus aérée 29 de l'os.

On configure la hauteur de la zone 4 et de l'étage 24 de sorte à ce qu'elle soit équivalente à l'épaisseur d'os dense 28 de la mâchoire du patient.

D'une façon générale, au vu des morphologies habituellement constatées chez les patients adultes, la hauteur de la zone 4 et de l'étage 24 sera avantageusement sélectionnée entre 2,7 et 3,5 mm. Cet étage de l'implant 1 et de l'outil de forage 21 représentent par ailleurs avantageusement entre 20 et 35% de la hauteur totale de l'implant 1.

On donne ci-après deux exemples avantageux de sélection de dimension en se référant à l'implant 1.

**Exemple 1 :**

Hauteur de la zone apicale 17 : 0,2 mm

Hauteur de la zone de base 2 : 2 mm

Hauteur de la zone d'ancrage centrale 3 : 4 mm

Hauteur de la zone d'ancrage terminale 4 : 3,3 mm

Hauteur de la zone de butée 5 : 0,5 mm

On forme ainsi un implant 1 de hauteur globale de 10 mm.

**Exemple 2:**

Hauteur de la zone apicale 17 : 0,2 mm

Hauteur de la zone de base 2 : 2 mm

Hauteur de la zone d'ancrage centrale 3 : 7 mm

Hauteur de la zone d'ancrage terminal 4 : 3,3 mm

Hauteur de la zone de butée 5 : 0,5 mm

On forme ainsi un implant 1 de hauteur globale de 13 mm.

De façon avantageuse, l'implant 1 selon l'invention présente par ailleurs une pluralité de rainures longitudinales 10a, 10b, 10c, 10d formées suivant son axe longitudinal et sur l'intégralité de sa hauteur hormis au niveau de la portion de zone de butée 5 de sorte à conférer une caractère auto taraudant à l'implant 1. Cette faculté d'auto taraudage en combinaison avec la conformation de l'outil de forage 21 de l'invention évite tout recours à des instruments additionnels pour la mise en place de l'implant 1.

A titre préféré, et en référence à la figure 8, on réalise quatre rainures 10a, 10b, 10c, 10d espacées de 90% sur la périphérie de l'implant 1.

Ces rainures 10a, 10b, 10c, 10d ainsi réparties et sur toute la hauteur de l'implant 1 permettent une décompression hydraulique homogène tout autour de l'implant 1.

A son extrémité supérieure, l'implant 1 comporte des moyens de connexion 6 aptes à coopérer avec des organes rapportés et notamment un dispositif prothétique.

A titre préféré, les moyens de connexion 6 comportent un trou fileté central et une gorge périphérique présentant un bord intérieur polygonal et un bord externe circulaire.

Plus précisément, la zone destinée à recevoir la dent artificielle est constituée d'une émergence prothétique monobloc pourvue d'un hexagone externe protégé par un cône morse sur lequel se trouve pré montée en usine une bague d'entraînement permettant la mise en place de l'implant 1. Ce segment situé au niveau de la crête toute proche de la muqueuse comporte une portion lisse poli miroir faisant avantageusement ainsi office de zone de butée 5.

Toujours à titre avantageux et non représenté, au niveau de la zone apicale 17 arrondie atraumatique, par la face inférieure 7 de l'implant 1 est réalisé un trou fileté interne sur une portion de la hauteur de l'implant 1 apte à coopérer avec une tige filetée rapportée permettant la préhension sans aucun contact de l'opérateur avec l'implant 1.

On comprend aisément que, par cette possibilité, l'implant 1 peut être manipulé sans contact par sa face supérieure ou par sa face inférieure 7.

On a représenté aux dessins un mode de réalisation de l'implant 1 selon l'invention présentant une surface externe à la structure spécifique qui est décrite plus précisément plus après. Cette structure peut être mise en oeuvre en association avec l'association implant 1 / outil de forage 21 précitée ou individuellement, avec un outillage classique.

Ainsi, en figure 1, on note que la zone de base 2 et la zone d'ancrage centrale 3 présentent un filetage primaire 8 d'un pas par exemple de 0,9 mm.

Suivant une première possibilité, le profil des filets du filetage primaire 8 est trapézoïdal asymétrique (avec un flanc de filet plus incliné que l'autre) tel que représenté en figure 1. Suivant une autre possibilité, le filetage primaire 8 a un profil trapézoïdal symétrique tel qu'apparaissant en figure 4. Enfin, une autre variante est montrée en figure 3 avec un profil rectangulaire.

Pour augmenter considérablement la surface de contact entre l'os et la paroi de l'implant 1, on forme selon l'invention, un filetage additionnel ci-après dénommé filetage secondaire 9 sur la surface externe même des filets du filetage primaire 8. Une représentation plus précise de ce filetage secondaire 9 est présentée aux figures 3 et 4.

A titre d'exemple, le filetage secondaire 9 à un pas compris entre 0,25 et 0,40 mm. Bien que dimension inférieure au filetage primaire 8, le filetage secondaire 9 suit l'évolution de l'implant 1 au cours de son introduction dans le trou 16 et se met en place progressivement en coopération avec la paroi osseuse sans provoquer d'arrachement de celle-ci.

On comprend aisément que les filetages 8 et 9 coopèrent de sorte à produire un ancrage particulièrement efficace et ce dans une zone osseuse où il convient de répartir les contraintes mécaniques de façon optimale puisqu'il s'agit d'une zone peu dense repérée 29 aux figures 5 et 6.

Toujours à titre préféré, tout ou partie de la surface périphérique de l'implant 1 comporte un motif nano texturé dans un souci d'augmenter encore la surface de contact. Le motif nanométrique ainsi formé peut être réalisé par l'intermédiaire d'une attaque chimique du matériau de l'implant 1 (ce dernier est avantageusement en titane pur).

Au niveau de la zone d'ancrage 4, on forme préférentiellement un filetage d'un pas équivalent au filetage secondaire 9 avec un motif nanométrique 15. Cette configuration assure un ancrage à frottement doux dans l'os cortical de façon à éviter les fissures voire les fractures des rebords osseux. Comme indiqué précédemment cette portion est elle-même auto taraudante.

Suivant une autre possibilité avantageuse combinée aux caractéristiques précédentes ou mise en oeuvre individuellement, au niveau du filetage primaire 8, certains filets sont réusinés de sorte à produire un fond de filet additionnel formant des cuvettes respectivement supérieures 13 et inférieures 14. Dans l'exemple représenté en figure 10, on comprend que le logement ainsi formé permet la constitution d'un réservoir pour recevoir des cellules souches de reconstruction osseuse.

De par la configuration illustrée et par la présence des cuvettes supérieures 13 et inférieures 14 (ces cuvettes 13, 14 sont munies d'un rebord périphérique servant de protection lors de la mise en place de l'implant 1. Ce profil empêche l'élimination de la greffe autologue lors de la progression de l'implant 1 vers son site osseux final), les cellules souches sont maintenues en place dans le logement au cours de la progression de l'implant 1 dans le trou 16. Ces cellules ne sont donc pas dégradées ni perdues lors de la phase d'implantation.

Les combinaisons de cuvettes 13 et 14 formant des réservoirs à cellules souches ou cellules pré osseuses autologues sont avantageusement placées pour venir directement en contact avec la spongiosa qui est la partie la plus vascularisée et cellulairement riche du tissu osseux constituant le lit receveur de l'implant 1.

Les cuvettes 13, 14 portant les cellules souches pré osseuses peuvent par ailleurs comporter un motif nanométrique 15 tel qu'indiqué précédemment. La conjugaison de l'ostéotome stratifiant constituant l'outil de forage 21, les strates de l'implant 1, et notamment ses parties coniques, la conformation des cuvettes 13, 14 permettant l'adhésion primaire des cellules pré osseuses directement mises en contact avec la partie active du site osseux recevoir permet la repousse osseuse accélérée quelque soit la zone osseuse implantée. Les cuvettes 13, 14 sont réalisées avantageusement au niveau de la zone d'ancrage centrale 3 de l'implant 1.

La forme du réservoir illustrée, réalisé avec une gorge dans au moins certains filets et présentant deux cuvettes 13, 14 pourrait cependant être différente sans sortir du cadre de l'invention. Notamment, d'autres profils d'usinage du fond de filets sont possibles.

On notera que l'outil de forage 21 ici présenté réalisé de façon homologue à l'implant 1 est préférentiellement à usage unique de sorte à produire une combinaison d'implant 1 et d'outil 21 parfaitement adéquate et avec des tolérances très limitées. Il faut noter qu'actuellement les systèmes d'implant existants présentent des différences de filetage, d'état de surface et de forme qui ont pour conséquence que les outils de forage utilisés de façon successive et en grand nombre leur sont mal adaptés.

On décrit ci-après une possibilité d'utilisation avec un protocole opératoire.

Vingt et un jours avant la mise en place de l'implant, on réalise un mini traumatisme au niveau des mâchoires à l'aide d'un trocart trans-osseux.

Le chargement des cellules souches sur l'implant 1 est réalisé de la façon suivante :
- prise de sang effectuée sur le patient. Ce sang est ensuite centrifugé extra temporanément dans le bloc opératoire et les trois phases sont séparées, à savoir sérum, caillots de fibrine et globules rouges.
- L'implant 1 est directement immergé dans le sérum. Grâce à sa structure comportant les filetages primaire 8, secondaire 9 et le motif 15 ainsi que les cuvettes 13, 14, sa mouillabilité est augmentée de façon considérable. Les protéines contenues dans le sérum vont s'adsorber sur la surface préférentiellement en titane pur de l'implant 1 constituant aussi une interface de molécules favorables à la future adhésion des cellules pré osseuses et osseuses prélevées extra temporanément au niveau du périoste du patient.
- Les cellules souches et/ou pré osseuses sont prélevées au niveau de la brèche réalisée précédemment (vingt et un jours plus tôt) ainsi que quelques micro fragments d'os cortical collectés dans la zone du trauma primaire grâce à un micro chargeur (trocart curette) à cellules souches et placées dans les réservoirs imbibés de sérum situés sur les flancs de l'implant 1 (cuvettes 13, 14).
- L'implant sert à la fois d'implant dentaire et de porte greffon. Il est alors introduit dans le lit osseux receveur spécifiquement profilé par l'outil de forage 21 représenté sous forme du trou 16 présentant plusieurs cylindres de diamètre croissant. Les parties coniques de l'implant 1 permettent de traverser les strates cylindriques successives du trou 16 avec une surface de frottement présente mais réduite. La disposition ainsi réalisée empêche l'évacuation des greffons cellulaires lors de la mise en place de l'implant sans pour autant compromettre son blocage primaire dans l'os.
- Les différents étages réalisés au niveau du trou 16 par l'outil de forage 21 et formés en correspondance sur l'implant 1 permettent un verrouillage axial de la structure de l'implant 1. Chaque zone de l'implant se comporte comme un système anti-retour permettant une stabilisation primaire absolue de l'implant 1 dans le lit osseux receveur. Cette immobilité primaire optimale est durable et est indispensable à la prolifération des cellules osseuses et à la maturation du tissu osseux autour de l'implant 1 évitant alors tout risque de rejet.

On notera que le mode de préhension bipolaire réalisé soit par la face inférieure 7 soit par les moyens de connexion 6 permet une manipulation très pratique dans la phase d'imprégnation de l'implant 1 dans le sérum.

En conclusion, l'invention intègre les paramètres du génie biologique et génétique du patient en même temps que la simplicité de mise en place à l'aide d'un foret unique stratifiant le lit osseux receveur de façon à permettre une mise en place automatique favorisant le blocage primaire de l'implant 1. La conséquence immédiate de la mise en contact de cellules souches et/ou de cellules pré-osseuses de l'implant 1 porteur avec la microcirculation du lit receveur sera le développement d'un tissu osseux sur l'implant 1, supprimant de ce fait tout risque de rejet. Ceci est particulièrement efficace lorsque l'étude scanner montre un site osseux receveur de qualité moyenne à médiocre.

Les réservoirs porteurs de cellules souches et/ou de cellules pré-osseuses autologues permettent de « booster » la réponse osseuse sans passer par une culture cellulaire in vitro préalable ni l'utilisation de produit d'origine animale. De fait, on réalise grâce à l'implant de l'invention une véritable transplantation in vivo des propres cellules souches et/ou pré-osseuses du patient en même temps que la pose de l'implant 1.

Il n'y a pas lieu de rechercher l'antigénicité, la carcinogénicité, les virus, les prions, etc. Le patient ne court aucun risque s'agissant de ses propres cellules prélevées in situ et greffées extemporanément, en même temps que l'installation de l'implant 1.

REFERENCES

1. Implant

2. Zone de base

3. Zone d'ancrage centrale

4. Zone d'ancrage terminale

5. Zone de butée

6. Moyen de connexion prothétique

7. Face inférieure

8. Filetage primaire

9. Filetage secondaire

10a, 10b, 10c, 10d. Rainures longitudinales de taraud

11. Surface d'arrêt en translation

12. Flanc de filet

13. Cuvette supérieure

14. Cuvette inférieure

15. Motif nanométrique

16. Trou

17. Zone apicale

21. Outil de forage

22. Etage de forage pilote apical

23. Etage d'élargissement central

24. Etage de forage terminal

25. Etage de butée

26. Surface latérale

27. Corps de couplage

28. Os dense

29. Os aéré

30. Nerf

31. Etage de pointage

## Revendications

1. Dispositif pour l'implantologie dentaire comportant un outil de forage (21) de l'os d'une mâchoire et un implant (1) apte à l'ancrage d'un dispositif prothétique,
a) l'outil de forage (21) présente cinq étages avec, successivement,
- un étage de pointage (31) au niveau de l'extrémité distale,
- un étage de forage pilote apical (22),
- un étage d'élargissement central (23) de diamètre supérieur à celui de l'étage de forage pilote (22),
- un étage de forage terminal (24) de diamètre supérieur à celui des étages précédents,
- un étage de butée (25) crestale au niveau de l'extrémité proximale de l'outil de forage (21) ; **caractérisé par le fait que**
b) l'implant (1) est formé de façon homologue à l'outil de forage (21) et comporte cinq zones sur sa hauteur avec, successivement :
- une zone apicale (17) arrondie d'une hauteur sensiblement inférieure ou égale à celle de l'étage de pointage (31),
- une zone de base (2) tronconique d'une hauteur sensiblement équivalente à celle de l'étage de forage pilote apical (22) de l'outil de forage (21),
- une zone d'ancrage centrale (3) cylindrique de hauteur sensiblement équivalente à celle de l'étage d'élargissement central (23) de l'outil de forage (21),
- une zone d'ancrage terminale (4) tronconique de hauteur sensiblement équivalente à celle de l'étage de forage terminal (24) de l'outil de forage (21),
- une zone de butée (5) d'une hauteur sensiblement équivalente à celle de l'étage de butée (25) crestale de l'outil de forage (21) ;
et **par le fait que** la zone d'ancrage centrale (3) et la zone de base (2) de l'implant (1) comportent un filetage primaire (8) sur la surface duquel est formé un filetage secondaire (9) de plus petite dimension.

2. Dispositif selon la revendication 1 dans lequel la zone d'ancrage terminale (4) de l'implant a une hauteur comprise entre 20% et 35% de la hauteur totale de l'implant (1).

3. Dispositif selon l'une quelconque des revendications 1 à 2 dans lequel la zone d'ancrage terminale (4) de l'implant (1) a une hauteur comprise entre 1,7 et 3,5 mm.

4. Dispositif selon l'une quelconque des revendications 1 à 3 dans lequel l'étage de butée (5) de l'outil de forage (21) est un lamage dont la surface latérale a un profil de coupe.

5. Dispositif selon l'une quelconque des revendications 1 à 4 dans lequel l'implant (1) comporte quatre rainures longitudinales (10a, 10b, 10c, 10d) de taraudage depuis la zone apicale (17) jusqu'à la zone d'ancrage terminale (4).

6. Dispositif selon l'une des revendications précédentes dans lequel le filetage primaire (8) a un pas de 0,9 mm et le filetage secondaire (9) a un pas compris entre 0,25 mm et 0,4 mm.

7. Dispositif selon l'une quelconque des revendications précédentes dans lequel la zone d'ancrage terminale (4) de l'implant (1) comporte un filetage dont le pas est compris entre 0,25 mm et 0,4 mm.

8. Dispositif selon l'une quelconque des revendications précédentes dans lequel la surface périphérique filetée de l'implant (1) présente un motif nanométrique additionnel.

9. Dispositif selon la revendication 7 ou la revendication 8 dans lequel les flancs du filetage primaire comportent des cuvettes de réception (13, 14) de cellules souches.

10. Dispositif selon l'une quelconque des revendications 7 à 9 dans lequel le filetage primaire (8) est trapézoïdal symétrique.

11. Dispositif selon l'une quelconque des revendications 7 à 9 dans lequel le filetage primaire (8) est trapézoïdal asymétrique.

12. Dispositif selon l'une quelconque des revendications 7 à 9 dans lequel le filetage primaire (8) a un profil rectangulaire.

## Patentansprüche

1. Vorrichtung zum Einsetzen von Zahnimplantaten mit einem Bohrwerkzeug (21) für den Kieferknochen und einem zum Verankern einer Prothese geeigneten Implantat (1),
a) bei dem das Bohrwerkzeug (21) fünf Stufen in folgender Reihenfolge aufweist:
• eine Ankörnstufe (31) am distalen Ende,
• eine apikale Pilotbohrstufe (22),
• eine zentrale Erweiterungsstufe (23) mit einem größeren Durchmesser als die Pilotbohrstufe (22),
• eine Fertigbohrstufe (24) mit größerem Durchmesser als die vorhergehenden Stufen,
• eine crestale Anschlagstufe (25) in Höhe des proximalen Endes des Bohrwerkzeugs (21),
**gekennzeichnet dadurch,**
b) **dass** das Implantat (1) entsprechend dem Bohrwerkzeug (21) ausgebildet ist und über seine Höhe fünf aufeinander folgende Zonen besitzt:
• eine gerundete, apikale Zone (17), deren Höhe annähernd kleiner oder gleich der der Ankörnstufe (31) ist,
• eine stumpf konische Basiszone (2), deren Höhe der der apikalen Pilotbohrstufe (22) des Bohrwerkzeugs (21) annähernd äquivalent ist,
• eine zylindrische, zentrale Verankerungsstufe (3), deren Höhe der der zentralen Erweiterungsstufe (23) des Bohrwerkzeugs (21) annähernd äquivalent ist,
• eine stumpf konische, terminale Verankerungszone (4), deren Höhe der der terminalen Bohrstufe (24) des Bohrwerkzeugs (21) annähernd äquivalent ist,
• eine Anschlagzone (5), deren Höhe der der crestalen Anschlagtufe (25) des Bohrwerkzeugs (21) annähernd äquivalent ist,
sowie dadurch, dass die crestale Verankerungszone (3) und die Basiszone (2) des Implantats (1) ein primäres Gewinde (8) aufweisen, auf dessen Oberfläche ein sekundäres Gewinde (9) mit kleinerer Abmessung aufgebracht ist.

2. Vorrichtung gemäß Patentanspruch 1, bei der die Höhe der terminalen Verankerungszone (4) des Implantats 20 % bis 35 % der Gesamthöhe des Implantats (1) ausmacht.

3. Vorrichtung gemäß einem der Patentansprüche 1 bis 2, bei der die Höhe der terminalen Verankerungszone (4) des Implantats (1) zwischen 1,7 mm und 3,5 mm beträgt.

4. Vorrichtung gemäß einem der Patentansprüche 1 bis 3, bei dem die Anschlagstufe (5) des Bohrwerkzeugs (21) ein Flachsenker ist, dessen seitliche Fläche ein Schneidprofil besitzt.

5. Vorrichtung gemäß einem der Patentansprüche 1 bis 4, bei der das Implantat (1) vier Längsnuten (10a, 10b, 10c, 10d) zum Gewindeschneiden besitzt, die von der apikalen Zone (17) bis zur terminalen Verankerungszone (4) verlaufen.

6. Vorrichtung gemäß einem der vorstehenden Patentansprüche, bei der das primäre Gewinde (8) eine Ganghöhe von 0,9 mm und das sekundäre Gewinde (9) eine Ganghöhe zwischen 0,25 mm und 0,4 mm hat.

7. Vorrichtung gemäß einem der vorstehenden Patentansprüche, bei der die terminale Verankerungszone (4) des Implantats (1) ein Gewinde mit einer Ganghöhe zwischen 0,25 mm und 0,4 mm besitzt.

8. Vorrichtung gemäß einem der vorstehenden Patentansprüche, bei der die mit dem Gewinde versehene Mantelfläche des Implantats (1) zusätzlich ein nanometrisches Muster aufweist.

9. Vorrichtung gemäß Patentanspruch 7 oder Patentanspruch 8, bei der die Flanken des primären Gewindes Vertiefungen (13, 14) zur Aufnahme von Stammzellen besitzen.

10. Vorrichtung gemäß einem der Ansprüche 7 bis 9, bei der das primäre Gewinde (8) ein symmetrisches Trapezgewinde ist.

11. Vorrichtung gemäß einem der Ansprüche 7 bis 9, bei der das primäre Gewinde (8) ein asymmetrisches Trapezgewinde ist.

12. Vorrichtung gemäß einem der Ansprüche 7 bis 9, bei der das primäre Gewinde (8) ein rechteckiges Profil besitzt.

## Claims

1. Dental implantation device comprising a drill bit (21) for drilling the jaw bone and an implant (1) able to anchor a prosthetic device,
a) the drill bit (21) has five stages, successively as follows:
- a pointing stage (31) at the distal end,
- a pilot apical drilling stage (22),
- a central enlarged stage (23) with diameter greater than that of the pilot drilling stage (22),
- a terminal drilling stage (24) with diameter greater than the diameter of the preceding stages,
- a crestal stop stage (25) at the proximal end of the drill bit (21), **characterized in that**:
b) the implant (1) is shaped to match the drill bit (21) with five stages, successively along its height as follows:
- an rounded apical zone (17) with a height that is notable less than or substantially equal to that of the pointing stage (31),
- a truncated conical base zone (2) with a height that is substantially equivalent to that of the apical pilot stage (22) of the drill bit (21),
- a central cylindrical anchor zone (3) with a height that is substantially equivalent to that of the central enlargement stage (23) of the drilling tool (21).
- a truncated conical terminal anchor zone (4) with a height that is substantially equivalent to that of the terminal drilling stage (24) of the drill bit (21),
- a stop zone (5) with a height that is substantially equivalent to that of the crestal stage stop (25) of the drill bit (21);
and **in that** the central anchor zone (3) and the base zone (2) of the implant (1) comprise a primary thread (8) on the surface of which is formed a smaller secondary thread (9).

2. Device according to claim 1 wherein the terminal anchor region (4) of the implant is between 20% and 35% of the total height of the implant (1).

3. Device according to any one of claims 1 to 2 wherein the terminal anchoring zone (4) of the implant (1) is between 1.7 and 3.5 mm long.

4. Device according to any one of claims 1 to 3 wherein the stop stage (5) of the drill bit (21) is a recess the lateral surface of which has a cutting profile.

5. Device according to any one of claims 1 to 4 wherein the implant (1) comprises four longitudinal grooves (10a, 10b, 10c, 10d) for tapping from the apical zone (17) to the terminal anchor zone (4).

6. Device according to anyone of the preceding claims wherein the primary thread (8) has a pitch of 0.9 mm and the secondary thread (9) has a pitch of between 0.25 mm and 0.4 mm.

7. Device according to any preceding claim wherein the terminal anchor zone (4) of the implant (1) comprises a thread the pitch of which is between 0.25 mm and 0.4 mm.

8. Device according to any preceding claim wherein the threaded peripheral surface of the implant (1) has an additional nanoscale pattern.

9. Device according to claim 7 or claim 8 wherein the primary threaded sides comprise hollows (13, 14) for receiving stem cells.

10. Device according to any one of claims 7 to 9 wherein the primary thread (8) is symmetrically trapezoidal.

11. Device according to any one of claims 7 to 9 wherein the primary thread (8) is asymmetrically trapezoidal.

12. Device according to any one of claims 7 to 9 wherein the primary thread (8) has a rectangular profile.
